# EUROPEAN PATENT APPLICATION

(11) **EP 3 112 180 A1**
(43) Date of publication of application: **04.01.2017**
(21) Application number: 15174214.5
(22) Date of filing: 29.06.2015
(51) Int. Cl.: B42D 15/04, A63F 1/02, B31D 1/02, G09F 3/00, B32B 7/06, B32B 7/12, B32B 27/12

(54) **STICKER-CARD AND PROCESS FOR PRODUCING STICKER-CARDS**

(71) Applicant: Edis S.p.A. Con Socio Unico, 41123 Modena (IT)
(72) Inventor: FERRARI, Marcello, 42020 SAN POLO D'ENZA (REGGIO EMILIA) (IT)
(74) Representative: Gagliardelli, Fabrizio

(57) **Abstract**

A process for producing sticker-cards (1) comprises the following steps: providing a first flat element (4, 5, 6, 8) comprising a transparent or translucent film (4) removably applied to a layer of paper (5) by adhesive means (6); reproducing at least one first graphic (31) on the film (4) of the first element (4, 5, 6, 8);
providing a second flat element comprising a layer of cardboard (7); and joining the first element to the second element (7), by bringing the film (4) in contact with a surface of the second element (7). The sticker- card (1) comprises: a transparent or translucent film (4) on a first surface (41), of which film a first graphic (31) is reproduced; a layer of paper (5) removably applied to a second surface of the film (4) opposite to the first surface (41) by adhesive means (6); and
a layer of cardboard (7) applied to the first surface (41) of the film (4).

## Description

The invention relates to a sticker-card and a process for producing sticker-cards.

Items called sticker-card are known which consist in a playable or collectible card ("card"), whereon a trading card or "sticker" is preliminarily applied.

In the following the terms "sticker" and "trading card" are used as synonymous.

In its initial configuration, the sticker-card exhibits a front side, whereon an image printed on the sticker, such as a cartoon character or a famous sportsman, is visible, and a rear side on which an image, such as a logo, is visible, which is printed on the card.

By removing the sticker from the card, the covered side of the latter becomes uncovered where a further image is printed, which may coincide or not with that of the sticker.

The sticker has an adhesive rear part which can be applied in the traditional manner, while the card can be used for a themed card game and be of the collectible or non-collectible type.

Currently, sticker-cards are obtained from card sheets printed at both sides thereof, thereby reproducing a plurality of images each of which corresponds to a respective card.

One of the sheets sides is plasticized with a transparent film, whereon a layer of permanent or semi-permanent glue is applied via a screen printing technique.

To the layer of glue, a pre-printed or to be printed sheet of paper is manually joined, which is provided for showing a multiplicity of images each of which has a corresponding sticker.

It should be appreciated that at the time there are no automatic machines on the market which are able to provide such a performance.

The handmade item is then appropriately cut, so that sticker-cards can be obtained.

The known system has at least two significant drawbacks.

First, a slow application of glue via a screen printing technique represents a major limitation to productivity.

Indeed it was found that the number of sheets which can be obtained per hour according to the known system does not exceed 1200.

Furthermore, a manual application of the glue to the sheets, results in high sticker-cards production costs in respect of a rather low production yield.

It is further known that any manual activity may result in a rather high risk of errors and uncertain execution times with consequent additional costs affecting the item produced according to the known art.

In this context, the technical task at the base of the present invention is to provide a process for producing sticker-cards and a sticker-card which overcome the drawbacks of the known art.

The technical task mentioned is attained by the process implemented according to claim 1 and by the sticker-card produced according to claim 10.

Further characteristics and advantages of the present invention will become more apparent from the indicative, and therefore non-limiting, description of a preferred but non-exclusive embodiment of a sticker-card, illustrated in the accompanying drawings wherein:
- Figures 1 and 2 are respectively a front view, in an initial configuration, and a rear view of the inventive sticker-card;
- Figure 3 is the view of Figure 1 in a second operational configuration of the sticker-card; and
- Figures 4, 5 and 6 are schematic sectional views representing different steps of the sticker-cards implementation method, or other operational configurations thereof.

With reference to the attached figures, by 1 it is indicated the sticker-card according to the invention.

The sticker-card 1 herein disclosed, is a preferably flat and rectangular-shaped item; however, further configurations of a different type are also possible provided that they fall within the scope of the invention described below.

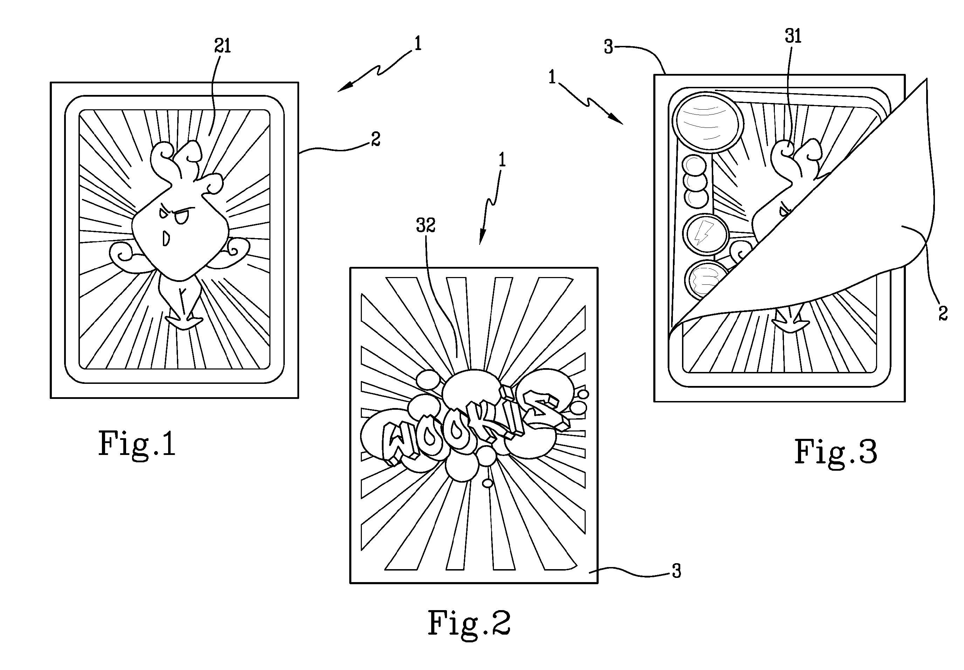

As shown in Figures 1-3, the sticker-card 1 comprises an adhesive sticker 2 which is preliminarily applied to a playable and/or collectible card 3 (hereinafter referred to as "card" for the sake of clarity).

The card 3 is provided with a surface showing a graphic 31 which is made visible after that the sticker 2 has been removed therefrom.

The term "graphic" is herein referred to as one or more images and/or one or more printings and/or any further visually significant aspects characterizing a surface.

The graphics 21, 31, 32 associated to the components of the invention are preferably printed.

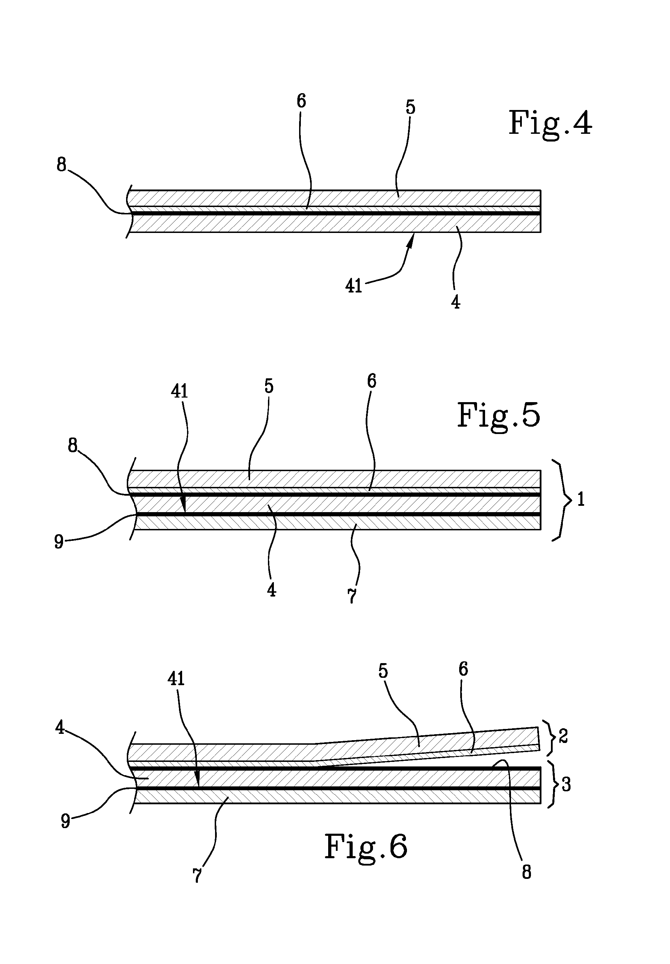

The sticker-card 1 of the invention comprises a transparent or translucent film 4 (see Figures 4 - 6) on a first surface 41, of which a first graphic 31 is reproduced such as an image showing a fantasy character.

Being defined by a flat layer, the film 4 comprises two surfaces opposite to one another bounding the sides or faces thereof; the same applies to the other layers of which mention is made in the present description. The film 4 is preferably made of polyethylene or other plastic material and can have a thickness between 12 and 40 microns, preferably 30 microns. The invention further provides a flat layer of paper 5 which is preliminarily applied to a second surface of the film 4 in a removable manner, which surface is opposite to that bearing the imprinted graphic.

In detail, the layer of paper 5, preferably of the coated type, is joined to the film 4 by adhesive means which may be constituted by a semi-permanent glue 6.

The layer of paper 5 can have a thickness between 60 and 130, preferably it has a thickness equal to 80 microns.

In turn, the layer of paper 5 is provided with its own graphic, or "second graphic" 21 reproduced on its surface opposite to that applied to the film 4. The sticker-card 1 herein disclosed further comprises a layer of cardboard 7 preferably applied in a permanent manner to said first surface 41 of the film 4, i.e. the one whereon the graphic 31 is printed.

In detail, the layer of cardboard 7 may be applied to the film 4 by means of a layer of permanent glue 9.

The cardboard 7 can have a thickness between 250 and 400; preferably it has a thickness equal to 300 microns.

The cardboard 7 may include its own graphic, or "third graphic" 32 relative to its free surface, i.e. the one not joined to the film 4.

In practice, the sticker-card 1 is formed by several superposed layers, particularly comprising the cardboard 7, the plastic film 4 and the paper 5, which are laterally defined by perimeters having the same shape.

As said, the layer of paper 5 has an "external" graphic 21 and is removably applied to the film 4 which is instead permanently joined to the cardboard 7.

Therefore, the cardboard 7 and the film 4 define said card 3 and the layer of paper 5, together with the layer of glue 6, once removed from the card 3, define a sticker 2 that can be stuck to an album or to any other supports.

By separating the sticker 2 from the card 3, the inner side of the card 3 becomes uncovered, thus the image 31, (or a different graphic), is made visible, which is imprinted on the film 4 (see figure 3), which film 4 is joined to the layer of cardboard 7.

In fact, though the above mentioned first graphic 31 is reproduced on the "internal" surface 41 of the film 4, which is in direct contact with the cardboard 7 and thus is enclosed between the film 4 and the cardboard 7, the imprinted images or printings are not hidden by the the thickness of the film 4, in that the latter is transparent (or more translucent).

The film 4 itself rather constitutes a protection which maintains the images and printings of the first graphic 31 unchanged.

Therefore, the user has available a collectible or playable card 3 showing the first graphic 31 on one side, for example comprising images and symbols associated to the character of the sticker 2, and the third graphic 32 on opposite side thereof, showing, by way of example, a logo or the name of a themed game, etc. (see Figure 2).

Preferably, the invention provides use of a layer 8 of a substance, such as silicone, covering the surface of the film 4 applied to the layer of paper 5 via the semi-permanent glue 6, so as to facilitate removal of the sticker 2 therefrom by a user.

The advantages of the sticker-card 1 herein disclosed will become more apparent from the following detailed description of the implementing process as below illustrated.

The process of the invention provides to make available a first flat element 4, 5, 6, 8 (shown in Figure 4) comprising the transparent (or translucent) film 4 which was already removably applied to the layer of paper 5 intended to define the stickers 2.

In detail, as said, such an application may be obtained by adhesive means such as a semi-permanent glue 6, or other similar substances.

Preferably, the first element 4, 5, 6, 8 is provided in the form of a strip wound inside a reel.

Therefore, if within the description of the sticker-card 1, the term "layer" was referred to as a single component of the finished item (i.e. the single sticker-card 1), within the implementing process it may indicate a part of the raw material (or base material), preferably provided in the form of a strip still to be cut.

On the film 4 of the first element, the above mentioned first graphic 31 shall be printed, which is reproduced as a mirror image with respect to the image intended to characterize the card 3 in the manner already explained above.

To be more precise, owing to the fact that at this stage the first element 4, 5, 6, 8 is provided in the form of a strip (and in any event it is still to be cut), the film 4 is printed with a plurality of first graphics 31, i.e. images corresponding to the single card 3 which are in predefined mutual positions along the surface of the strip itself.

In practice, the different images 31 (or, in broad terms, the several first graphics), are distributed within a matrix on the surface of the film 4. Preferably, when provided, the layer of paper 5 is free of graphics, that is, it is still to be printed.

Alternatively, the layer of paper 5 may already bear aforesaid second graphic 21, printed, for example, via rotogravure techniques.

The method further provides to make available a second flat element comprising a layer of cardboard 7.

The second element 7 as well is preferably provided in the form of a strip, wound in a reel, preferably a "neutral" strip, i.e. not yet printed.

At this stage, the film 4 of the first element 4, 5, 6, 8 is applied to the cardboard 7, preferably permanently (in particular by means of a permanent glue), thereby defining a unitary strip 4, 5, 6, 7, 8, 9 (shown in Figure 5) which can in turn be wound in a reel prior to being cut into sheets.

It should be appreciated that, owing to the firm adhesive bonding of the film 4 to the cardboard 7, (obtained with use of a permanent glue), but to a weak adhesive bonding of the former to the paper 5, (due to use of a semi-permanent glue and silicone release liner), the sticker can be smoothly and "sweetly" removed from the card by the user.

Indeed, due to the difference existing in the way the two kinds of adhesive bonding occur, the separation between the sticker-card layers always occurs at the point where the adhesive bonding is weaker, that is to say, between the layer of paper 5 and the film 4, which is to be intended as the point suitable for the purpose.

In this case, the unitary strip is obtained by using a machine of the reel-to-reel type.

For joining the film 4 to the layer of cardboard 7, a layer of permanent glue 9 is preferably used.

This may be attained thanks to the fact that both the cardboard 7 and the first element constituted by the layer of paper 5 applied in advance to the plastic film 4, exhibit a sufficient rigidity for enabling a reel-to-reel joining process.

Thus, an optimal joining process is obtained, in that use of automatic machines allows to manage both strips alignment as well as the tensions acting on above mentioned materials.

Furthermore, use of automatic machines for producing sticker-cards 1 overcomes the drawbacks explained in the discussion on the prior art which instead makes use of a process of the manual type.

Following the joining process, the resulting strip 4, 5, 6, 7, 8, 9 is cut into sheets, for example by means of a transverse cutter.

At this point, the strip 4, 5, 6, 7, 8, 9 may be printed on opposite sides thereof, that is to say the second graphic 21 is printed on the paper 5 side, whereas the third graphic 32 is printed on the cardboard 7 side. In detail, the two opposite surfaces of the resulting strip 4, 5, 6, 7, 8, 9 are to be printed with a plurality of images 21, 32, arranged in a matrix, which images must be in the same mutual position of the images 31 impressed on the film 4 (the first graphic as above mentioned).

In this way, after the singularization, identical sticker-cards 1 are obtained which are properly composed and free of any defects.

In order to obtain such a result, the unitary strip 4, 5, 6, 7, 8, 9 is to be cut into sheets of equal size, so that the images 31 printed on the film 4 within the single sheet, come to be in known positions.

The invention therefore provides the optional arrangement described below.

Contextually to the printing of the first graphic 31 of the first strip-like element 4, 5, 6, 8 relative to the film 4, there are further printed cutting marks, termed "cross marks", at least on the side of the paper 5 and, preferably, also on the film 4.

The cross marks act as a reference to locate the position of the cutting lines when the strip being cut into sheets, which strip is the one resulting from the joining between the strip of the cardboard 7 and the strip of the paper 5 and the transparent plastic film 4.

In particular, the cross marks are read by optical acquisition means provided in the cutting machine, whose processing unit therefore controls performance of the cutting lines.

Owing to this arrangement, it may be guaranteed that, although the images 31 are concealed from view due to the fact that they are reproduced on an inner surface of aforementioned "resulting" and/or unitary strip, such printed images are not crossed by the cuttings while the latter are being performed within the desired margins.

The reel-to-reel machine and the cutting machine can be functionally combined together so as to define a production plant, or in alternative to be used in different times and places.

On the base of the inventive process, automatic machines can be used for producing and obtaining sticker-cards 1 which, although structurally different from those of prior art, are able to offer to the user same functional and playful characteristics as the ones obtained by means of a manual process.

## Claims

1. A process for producing a sticker-card (1) comprising the following steps:
providing a first flat element (4, 5, 6, 8) comprising a transparent or
translucent film (4) removably coupled to a layer of paper (5) by adhesive means (6);
reproducing at least one first graphic (31) on said film (4) of the first element (4, 5, 6, 8);
providing a second flat element comprising a layer of cardboard (7); and
applying the first element to the second element (7), by bringing the film (4) in contact with a surface of the second element (7).

2. A process according to the preceding claim, wherein the film (4) of the first element, once said first graphic (31) has been reproduced thereon, is applied to said surface of the second element (7) by means of a permanent glue (9).

3. A process according to at least one of preceding claims, wherein the film (4) comprises a first surface (41) intended for bearing the first graphic (31) and an opposite second surface coated with a substance (8) suitable for facilitate the removal of the layer of paper (5) therefrom.

4. A process according to at least one of preceding claims, wherein said first graphic (31) is reproduced on the film (4) as a mirror image of the graphic intended to be visible as a result of the removal of the layer of paper (5).

5. A process according to at least one of preceding claims, wherein at least one second graphic (31) is reproduced on an outer surface of said layer of paper (5) opposite to a surface where said adhesive means (6) are provided.

6. A process according to at least one of preceding claims, in which said first element (4, 5, 6, 8) and said second element (7) are preliminarily provided in strips wound in respective reels.

7. A process according to the preceding claim, wherein the first element (4, 5, 6, 8) and the second element (7) are applied one to another by means of a machine of the reel-to-reel type.

8. A process according to at least one of preceding claims, wherein, from the first element and second element (4, 5, 6, 7, 8, 9) joined one to another, sticker-cards (1) are singled out by means of cutting operations.

9. A process according to at least one of claims 6 to 8, in which cutting marks are printed onto the film (4) and/or the layer of paper (5), and wherein the strips are cut into sheets, thereby defining the respective cutting lines according to the position of said cutting marks.

10. A sticker-card (1) **characterized by** comprising:
a transparent or translucent film (4) on a first surface (41) of which film (4) a first graphic (31) is reproduced;
a layer of paper (5) removably applied to a second surface of the film (4) by adhesive means (6), which second surface is opposite to said first surface (41); and
a layer of cardboard (7) applied to said first surface (41) of the film (4).

11. A sticker-card (1) according to the preceding claim, comprising a layer of a substance (8) covering said second surface of the film (4), which substance is suitable for facilitating the removal of the layer of paper (5) therefrom.

12. A sticker-card (1) according to claim 10 or claim 11, comprising a layer of permanent glue (9) between said first surface (41) of the film (4) and said layer of cardboard (7).

13. A sticker-card (1) according to at least one of claims 10 - 12, wherein said layer of paper (5) defines an adhesive trading card (2) previously applied to a playable and/or collectible card (3), whose first graphic (31) is made visible following removal of said trading card (2).

14. A plant for producing sticker-cards (1) comprising a coupling reel-to-reel machine which mounts at least one reel with the first element (4, 5, 6, 8) and one reel with the second element (7), according to at least one of claims 6 to 9, and a cutting machine suitable for cutting a strip (4, 5, 6, 7, 8, 9) into sheets, which strip is obtained by coupling the first and second element to one another.
